# EUROPEAN PATENT APPLICATION

(11) **EP 2 046 095 A2**
(43) Date of publication of application: **08.04.2009**
(21) Application number: 07253808.5
(22) Date of filing: 26.09.2007
(51) Int. Cl.: H05B 37/02, H05B 33/08

(54) **Illumination system**

(30) Priority: 30.07.2007 CN 200710137182
(71) Applicant: Topco Technologies Corp., Da-an District, Taipei City 106 (TW)
(72) Inventor: Tsai, Wen-Kuei, Sin-Jhuang City Taipei County (TW); Wang, Chun-Chien, Sijhih City Taipei County 221 (TW)
(74) Representative: Johnson, Terence Leslie

(57) **Abstract**

An illumination system (100) including a Globe Positioning System (GPS) unit (120), a Light Emitting Diode (LED) light source (130), a power supply unit (140), and a control platform (110) is provided. The power supply unit (140) is electrically connected to the GPS unit (120) and the LED light source (130), while the control platform (110) is electrically connected to the GPS unit (120), the LED light source (130), and the power supply unit (140). The above-mentioned illumination system (100) integrates the LED light source and other units in the system via the control platform, so as to provide multiple functions, such as illumination, globe positioning, energy saving, anti-theft, and precaution to natural disaster.

## Description

### BACKGROUND OF THE INVENTION

### Field of the Invention

The present invention relates to an illumination system. More particularly, the present invention relates to an illumination system capable of providing multiple functions, such as illumination, globe positioning, energy saving, anti-theft, and precaution to natural disaster.

### Description of Related Art

LEDs are semiconductor devices. The light emitting chips are mainly made of a compound semiconductor material containing III-V group chemical elements, for example, GaP, GaAs, and the like, and function on the principle of converting electric energy to light. That is to say, the compound semiconductor is powered to release excessive energy through the combination of electrons and holes, so as to emit photons (light). The LED can emit light without being heated or does not discharge to emit light. Therefore, the lifespan of the LED is up to 100,000 hours, and an idling time is not required. In addition, the LED has advantages of quick response speed (approximately 10⁻⁹ seconds), small volume, power-saving, low pollution, high reliability, and easy mass production. Thus, the LEDs have been intensively used in many fields, for example, light source and illumination device in large-scale bulletin boards, traffic lights, cellular phones, scanners, fax machines, etc.

Currently, the light emitting brightness and efficiency of the LEDs are continuously improved, and meanwhile the white LEDs with high brightness are successfully put into mass production, so the white LEDs have been gradually used in illumination devices such as indoor illumination and outdoor street lamps. However, as for the outdoor street lamps, the LED street lamps are generally designed to have a simple illumination function instead of bringing other added values to the passers-by or administrators.

### SUMMARY OF THE INVENTION

The present invention is directed to provide an illumination system capable of providing multiple functions, such as illumination, globe positioning, energy saving, anti-theft, and precaution to natural disaster.

As embodied and broadly described herein, the present invention provides an illumination system including a GPS unit, an LED light source, a power supply unit, and a control platform. The power supply unit is electrically connected to the GPS unit and the LED light source, while the control platform is electrically connected to the GPS unit, the LED light source, and the power supply unit. The above illumination system integrates the units in the system via the control platform, so as to provide multiple functions.

In an embodiment of the present invention, the power supply unit includes a DC power supply unit or an AC power supply unit, and the power supply unit may also include the DC power supply unit and the AC power supply unit simultaneously.

In an embodiment of the present invention, the DC power supply unit includes a solar cell.

In an embodiment of the present invention, the illumination system further includes an alarm unit electrically connected to the power supply unit and the control platform.

In an embodiment of the present invention, the alarm unit includes a loudspeaker, and the control platform is adapted for enabling the loudspeaker to generate an alarm sound.

In an embodiment of the present invention, when the GPS unit senses an abnormal position alternation, the control platform is adapted for enabling the loudspeaker to generate an alarm sound.

In an embodiment of the present invention, the alarm unit includes a sensor.

In an embodiment of the present invention, the sensor includes a optical sensor, a sound sensor, a vibration sensor, a motion sensor, or a temperature sensor.

In an embodiment of the present invention, the alarm unit includes a communication device, and when the communication device is turned on, the control platform enables the LED light source.

In an embodiment of the present invention, the communication device includes a telephone.

In an embodiment of the present invention, the illumination system further includes an image capture unit electrically connected to the power supply unit and the control platform.

In an embodiment of the present invention, the illumination system further includes a wireless communication unit electrically connected to the power supply unit and the control platform.

In an embodiment of the present invention, the wireless communication unit includes a 3 generation (3G) global system for mobile communications (GSM), a 3.5 generation (3.5G) global system for mobile communications (GSM), a 4 generation (4G) global system for mobile communications (GSM), a worldwide interoperability for microwave access (WiMAX), a personal handy-phone system (PHS), or an analog wireless transmission system.

In an embodiment of the present invention, the control platform is adapted for enabling the wireless communication unit to transmit a position information to a remote control center according to the position information detected by the GPS unit.

The present invention integrates the GPS unit, the LED light source, and the power supply unit into the same illumination system via the control platform, and thus the illumination system can provide multiple functions, such as illumination, globe positioning, energy saving, anti-theft, and precaution to natural disaster, so as to bring many added values to the users.

In order to make the aforementioned and other objectives, features and advantages of the present invention comprehensible, preferred embodiments accompanied with figures are described in detail below.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG 1 is a schematic view of an illumination system according to a first embodiment of the present invention.

FIG. 2 is a schematic view of an illumination system according to a second embodiment of the present invention.

FIG. 3 is another schematic view of an illumination system according to the second embodiment of the present invention.

FIG 4 is a schematic view of an illumination system according to a third embodiment of the present invention.

FIG. 5 is a schematic view of an illumination system according to a fourth embodiment of the present invention.

FIG. 6 is another schematic view of an illumination system according to the fourth embodiment of the present invention.

FIG 7 is a schematic view of an illumination system according to a fifth embodiment of the present invention.

FIG. 8 is a schematic view of an illumination system according to a sixth embodiment of the present invention.

### DESCRIPTION OF EMBODIMENTS

[The First Embodiment]

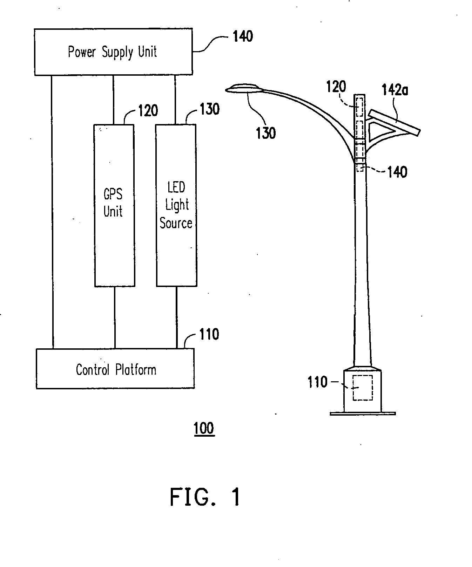

FIG. 1 is a schematic view of an illumination system according to a first embodiment of the present invention. Referring to FIG. 1, the illumination system 100 in this embodiment includes a GPS unit 120, an LED light source 130, a power supply unit 140, and a control platform 110. The power supply unit 140 is electrically connected to the GPS unit 120 and the LED light source 130, while the control platform 110 is electrically connected to the GPS unit 120, the LED light source 130, and the power supply unit 140. The control platform 110 integrates the GPS unit 120, the LED light source 130, the power supply unit 140 into the illumination system 100, so as to provide more abundant and practical functions.

In this embodiment, the power supply unit 140 includes a DC power supply unit 142 or an AC power supply unit 144 or both. The DC power supply unit 142 includes a solar cell 142a.

For example, if the illumination system 100 of this embodiment is applied to a street lamp, as shown at the right side of FIG 1, the appearance will have various alternations. Since the solar cell 142a converts the sunlight into electrical power supplied to the electronic devices such as the GPS unit 120, the LED light source 130, and the control platform 110 in the illumination system 100, the illumination system 100 has a thorough or partial self-supplying power efficacy. Also, the LED has a high light-emitting efficiency, thus the street lamp having high environmental protection and energy saving value can be produced through the combination of the solar cell and the LED. Furthermore, the GPS unit 120 in the illumination system 100 can calculate accurate longitude and latitude and time information at any time according to sensed satellite microwaves, such that the control platform 110 can calculate an accurate sunrise and sunset time of each day in a year according to the information, so as to enable the LED light source 130 to be turned on at an accurate sunset time and turned off at an accurate sunrise time, thereby further making the illumination system 100 become an intelligent street lamp with a high efficiency.

[The Second Embodiment]

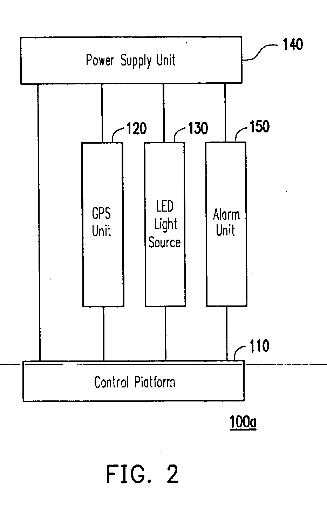

FIG. 2 is a schematic view of an illumination system according to a second embodiment of the present invention. Referring to FIG 2, the illumination system 100a of this embodiment is similar to the illumination system 100 in the first embodiment, except for the difference that, the illumination system 100a further includes an alarm unit 150 electrically connected to the power supply unit 140 and the control platform 110.

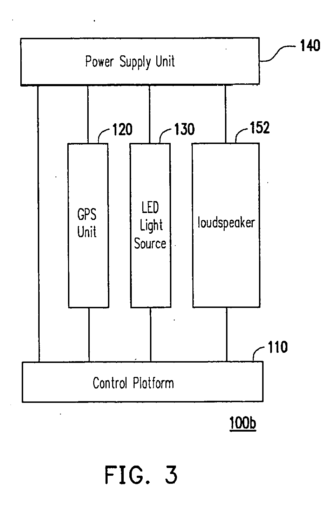

FIG. 3 is another schematic view of an illumination system according to the second embodiment of the present invention. Referring to FIG. 2 and FIG 3, the illumination system 100b of this embodiment is similar to the illumination system 100a, except for the difference that, the illumination system 100b adopts a loudspeaker 152 as the alarm unit 150 in FIG. 2, and the control platform 110 is adapted for enabling the loudspeaker 152 to generate an alarm sound.

For example, if the illumination system 100b of this embodiment is applied to the street lamp, when the GPS unit 120 senses an abnormal position alternation of the illumination system 100b at any time which may be caused by theft, nature disasters such as mud flow, or other reasons. At this point, the control platform 110 is adapted for enabling the loudspeaker 152 to generate the alarm sound, and thus the illumination system 100b has the functions of anti-theft and precaution to natural disaster.

[The Third Embodiment]

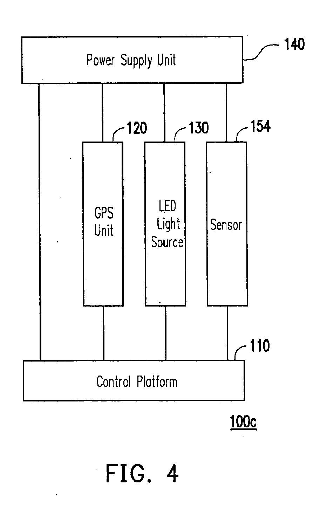

FIG. 4 is a schematic view of an illumination system according to a third embodiment of the present invention. Referring to FIG. 2 and FIG 4, the illumination system 100c of this embodiment is similar to the illumination system 100a in the second embodiment, except for the difference that, the illumination system 100c adopts a sensor 154 as the alarm unit 150 in FIG. 2, and the sensor 154 includes a optical sensor, a sound sensor, a vibration sensor, a motion sensor, or a temperature sensor.

For example, if the illumination system 100c of this embodiment is applied to a street lamp, when it is close to the evening on a rainy day, although it is not yet the accurate time for the sunset of that day, the optical sensor may sense an insufficient light, and at this point the control platform 110 may enable the illumination function of the LED light source 130.

Moreover, when the sensor 154 is a sound sensor, the sensor 154 is capable of determining whether a driver is sounding a horn in a no-horn road section according to a measured decibel value. When the sensor 154 is a vibration sensor, the sensor 154 can sense the severe vibration in the situations such as the street lamp being crashed by an automobile or clashed by the mud flow.

In another example, when the sensor 154 is a motion sensor, the sensor 154 is used to sense overspeed automobiles, the control platform 110 enables the LED light source 130 to emit an intensive flash to make a warning, and thus the function of keeping traffic safety can be achieved. In another example, when the sensor 154 is a temperature sensor, the sensor 154 is used to sense abnormal temperature rising which may be caused by a neighboring fire.

The information sensed by various sensors in the above third embodiment can be recorded by the control platform 110 for the later use as demanded.

[The Fourth Embodiment]

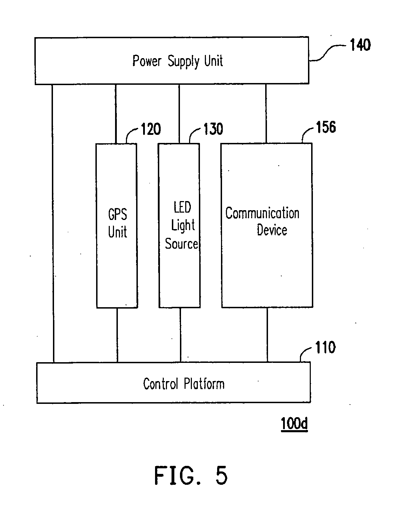

FIG. 5 is a schematic view of an illumination system according to a fourth embodiment of the present invention. Referring to FIG 2 and FIG. 5, the illumination system 100d of this embodiment is similar to the illumination system 100a in the second embodiment, except for the difference that, the illumination system 100d adopts a communication device156 as the alarm unit 150. When the communication device 156 is turned on, the control platform 110 enables the GPS unit 120 or the LED light source 130 or both.

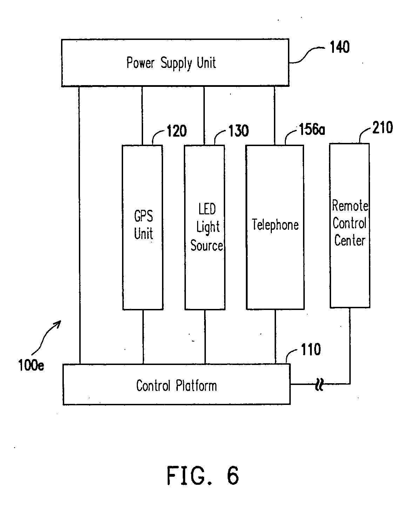

FIG. 6 is another schematic view of the illumination system according to the fourth embodiment. Referring to FIG. 5 and FIG. 6, the illumination system 100e of this embodiment is similar with the illumination system 100d, except for the difference that, the illumination system 100e adopts a telephone 156a as the communication device 156. For example, when the telephone 156a is picked up, the control platform 110 enables a part of the illumination function of the LED light source 130, when getting through the telephone 156a, the control platform 110 transmits the position information sensed by the GPS unit 120 to a remote control center 210 through a telephone line, and thus the control staff of the remote control center 210 can instantly master the accurate position of the issue for taking some necessary measures, for example, the nearest police car or firefighting unit may be called to take measures.

[The Fifth Embodiment]

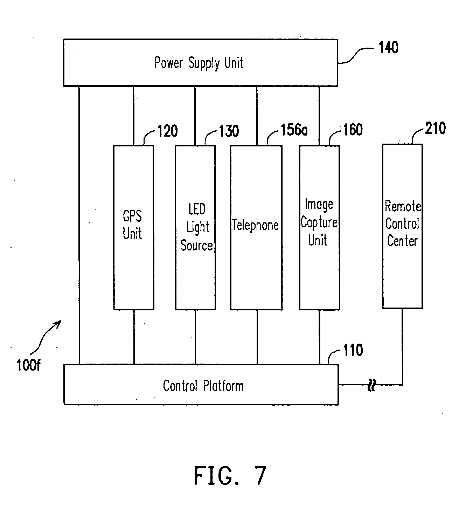

FIG. 7 is a schematic view of an illumination system according to a fifth embodiment of the present invention. Referring to FIG. 6 and FIG 7, the illumination system 100f of this embodiment is similar with the illumination system 100e in the fourth embodiment in FIG. 6, except for the difference that, the illumination system 100f further includes an image capture unit 160 electrically connected to the power supply unit 140 and the control platform 110.

For example, when getting through the telephone 156a, the control platform 110 enables the image capture unit 160 to capture images of the caller, and if necessary, can control the image capture unit 160 to make a 360° rotation to inspect the surroundings, so as to further understand the situation. Meanwhile, the control platform 110 may also enable the LED light source 130 to provide sufficient illumination, such that the images captured by the image capture unit 160 are clearer for being identified, thereby facilitating the control staff at the remote control center 210 to judge more accurately. If necessary, the remote control center 210 can contact with relevant staff, and use appropriate resources and equipment to take measures.

The telephone 156a and the image capture unit 160 of this embodiment can also exist individually to execute their respective functions. For example, the image capture unit 160 captures images for monitoring, and stores the image information in the control platform 110 for realizing the function of preventing crime, and improving public security. This embodiment is not used to limit the simultaneous using of the telephone 156a and the image capture unit 160.

[The Sixth Embodiment]

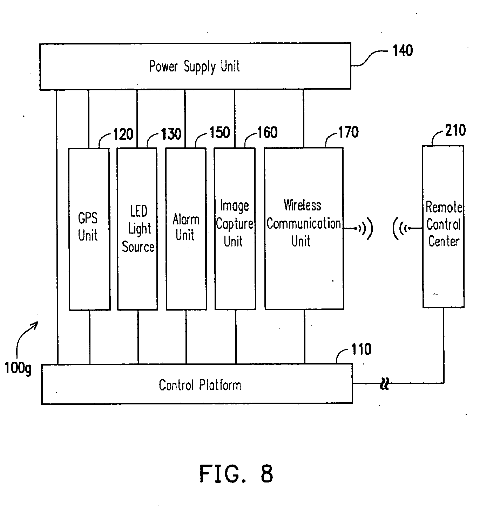

FIG. 8 is a schematic view of an illumination system according to a sixth embodiment of the present invention. Referring to FIG. 7 and FIG 8, the illumination system 100g of this embodiment is similar to the illumination system 100f in the fifth embodiment, except for the difference that, the illumination system 100g further includes a wireless communication unit 170 electrically connected to the power supply unit 140 and the control platform 110. The above wireless communication unit 170 includes a 3 generation (3G) global system for mobile communications (GSM), a 3.5 generation (3.5G) global system for mobile communications (GSM), a 4 generation (4G) global system for mobile communications (GSM), a worldwide interoperability for microwave access (WiMAX), a personal handy-phone system (PHS), or an analog wireless transmission system. The above control platform 110 is adapted for enabling the wireless communication unit 170 to transmit a position information to a remote control center 210 according to the position information detected by the GPS unit 120 at any time. The wireless communication unit 170 enables the illumination system 100g to communicate with the remote control center 210 in a wireless manner, and the information can be transmitted in a larger amount and with a higher speed.

For example, when the GPS unit 120 senses abnormal position alternations which may be caused by theft, nature disasters such as mud flow or other reasons, the control platform 110 may enable the WiMAX function of the wireless communication unit 170, and transmit the position information sensed by the GPS unit 120 to the remote control center 210. Thereby, the control staff of the remote control center 210 can master the accurate position of the illumination system 100g, and the wireless communication unit 170 is connected to the control platform 110, and the control platform 110 enables the image capture unit 160 to capture images to find out the surroundings. The images captured by the image capture unit 160 can be quickly returned to the remote control center 210 through the WiMAX function of the wireless communication unit 170. Therefore, the control staff of the remote control center 210 can takes proper measures instantly according to the actual situation.

The alarm unit 150, the image capture unit 160, and the wireless communication unit 170 of this embodiment can also exist individually to execute their respective functions. For example, the WiMAX function of the wireless communication unit 170 can transmit the position information sensed by the GPS unit 120 to the remote control center 210 at a determined interval for performing safety monitoring. This embodiment is not used to limit the simultaneous using of the alarm unit 150, the image capture unit 160, and the wireless communication unit 170.

In view of the above, the illumination system of the present invention adopts the control platform to integrate electronic devices such as the GPS unit, the LED light source, and the power supply unit, such that the illumination system has multiple functions, such as illumination, globe positioning, energy saving, anti-theft, and precaution to natural disaster. Therefore, the illumination system of the present invention can bring different added values under different circumstances, thereby having a wide application range.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An illumination system, comprising:
a globe positioning system (GPS) unit;
a light emitting diode (LED) light source;
a power supply unit, electrically connected to the GPS unit and the LED light source; and
a control platform, electrically connected to the GPS unit, the LED light source, and the power supply unit.

2. The illumination system as claimed in claim 1, wherein the power supply unit comprises a DC power supply unit or an AC power supply unit.

3. The illumination system as claimed in claim 2, wherein the DC power supply unit comprises a solar cell.

4. The illumination system as claimed in claim 1, wherein the power supply unit comprises the DC power supply unit and the AC power supply unit.

5. The illumination system as claimed in claim 4, wherein the DC power supply unit comprises a solar cell.

6. The illumination system as claimed in claim 1, further comprising an alarm unit electrically connected to the power supply unit and the control platform.

7. The illumination system as claimed in claim 6, wherein the alarm unit comprises a loudspeaker, and the control platform is adapted for enabling the loudspeaker to generate an alarm sound.

8. The illumination system as claimed in claim 7, wherein when the GPS unit senses an abnormal position alternation, the control platform is adapted for enabling the loudspeaker to generate an alarm sound.

9. The illumination system as claimed in claim 6, wherein the alarm unit comprises a sensor.

10. The illumination system as claimed in claim 9, wherein the sensor comprises a optical sensor, a sound sensor, a vibration sensor, a motion sensor, or a temperature sensor.

11. The illumination system as claimed in claim 6, wherein the alarm unit comprises a communication device, and when the communication device is turned on, the control platform enables the LED light source.

12. The illumination system as claimed in claim 11, wherein the communication device comprises a telephone.

13. The illumination system as claimed in claim 1, further comprising an image capture unit electrically connected to the power supply unit and the control platform.

14. The illumination system as claimed in claim 1, further comprising a wireless communication unit electrically connected to the power supply unit and the control platform.

15. The illumination system as claimed in claim 14, wherein the wireless communication unit comprises a 3 generation (3G) global system for mobile communications (GSM), a 3.5 generation (3.5G) global system for mobile communications (GSM), a 4 generation (4G) global system for mobile communications (GSM), a worldwide interoperability for microwave access (WiMAX), a personal handy-phone system (PHS), or an analog wireless transmission system.

16. The illumination system as claimed in claim 15, wherein the control platform is adapted for enabling the wireless communication unit to transmit a position information to a remote control center according to the position information detected by the GPS unit.
